# EUROPÄISCHE PATENTANMELDUNG

(11) **EP 3 236 394 A2**
(43) Veröffentlichungstag der Anmeldung: **25.10.2017**
(21) Anmeldenummer: 17000661.3
(22) Anmeldetag: 19.04.2017
(51) Int. Cl.: G06K 19/077

(54) **CHIPKARTE MIT ZWEI SPULEN UND FERRIT**

(30) Priorität: 22.04.2016 DE 102016004887
(71) Anmelder: Giesecke+Devrient Mobile Security GmbH, 81677 München (DE)
(72) Erfinder: Kluge, Stefan, 80997 München (DE)

(57) **Zusammenfassung**

Die vorliegende Erfindung betrifft einen kartenförmigen Datenträger mit einem kartenförmigen Kartenkörper und zwei Spulen, wobei mindestens ein Ferritelement in dem Kartenkörper angeordnet ist. Die erfindungsgemäße Chipkarte hat den Vorteil, dass eine verbesserte Ansprechfeldstärke bei mindestens einer der Spulen gegeben ist.

## Beschreibung

Die vorliegende Erfindung ist gerichtet auf einen kartenförmigen Datenträger mit einem Datenkörper und zwei Spulen, wobei ein Ferritelement vorgesehen ist, welches es ermöglicht, die Ansprechfeldstärke der erfindungsgemäßen Chipkarte zu verbessern. Die vorliegende Erfindung ist ferner gerichtet auf ein entsprechendes Verfahren zum Bereitstellen des kartenförmigen Datenträgers.

Bekannt sind unterschiedliche kartenförmige Datenträger, insbesondere Chipkarten, welche bestimmte sicherheitskritische Funktionen bereitstellen. Hierzu sollen Daten von dem kartenförmigen Datenträger kontaktlos ausgelesen werden. Bekannt sind daher Spulen bzw. Antennenspulen, welche in den Datenträgern verbaut werden. Bekannt sind hierbei sogenannte Halfsize-Spulen bzw. Fullsize-Spulen. Halfsize-Spulen umschließen einen Teil der Fläche, z.B. die Hälfte, einer Chipkarte. Fullsize-Spulen umschließen annähernd die ganze Fläche einer Chipkarte. Das Ansteuerungsverhalten einer Schaltung, die aus einer entsprechenden Antennenspule und einem mit der Antennenspule, auch Spule genannt, verbundenen elektronischen Bauelement, z.B. ein Chip, besteht, hängt typischerweise von der Größe der von der Spule umschlossenen Fläche ab. In der folgenden Beschreibung ist mit dem Ansteuerungsverhalten der Spule bzw. Antennenspule immer das Ansteuerungsverhalten der Schaltung gemeint, die aus der Antennenspule mit einem damit elektrisch verbundenen Bauelement, z.B. ein Chip, oder einer Schaltung besteht. Auf herkömmlichen Chipkarten werden beispielsweise zwei Halfsize-Spulen verbaut, welche auf gleicher bzw. in weiteren Ausführungen auf unterschiedlichen Frequenzen ansprechbar sind.

Die US 2003/0117336 A1 zeigt einen Aufkleber mit einer Antenne und einem elektronischen Chip. Ebenso findet ein Ferritring Anwendung.

Typischerweise erfolgt bei den meisten kontaktlosen Karten die Übertragung auf induktivem Wege, mit dem sich sowohl die Daten wie auch die Energieübertragung realisieren lassen. So sind im Kartenkörper eine oder mehrere Induktionsspulen integriert ausgebildet, die auf geeignete Weise mit der auf dem Halbleiterchip befindlichen Schaltung kontaktiert sind. Die Übertragung von elektrischen Signalen erfolgt nach dem Prinzip des lose gekoppelten Transformators. Hierfür werden Induktionsspulen verwendet, wobei die einzelne Induktionsspule in der Regel nur wenige Windungen aufweist und flach ausgebildet ist. Typischerweise werden die Halbleiterbauelemente in Form von vorgefertigten Modulen oder direkt als Chip auf die Spule montiert.

Elektronische Identifikationssysteme, bestehend aus einer elektronischen Chipkarte und einem Chipkarten-Lesegerät, bei denen berührungslos ein Datenaustausch zwischen einem Datenträger, der Chipkarte, und einem elektronischen Lesegerät stattfindet, sind bekannt. Ein wichtiger Parameter bei kontaktlosen Chipkarten stellt die Reichweite dar, also der maximale Abstand zwischen Chipkarte und Lese-Schreibstation, innerhalb dessen die Datenübertragung noch einwandfrei funktioniert. Abgesehen von den Eigenschaften der Lese-Schreibstation hängt die maximal mögliche Reichweite vor allem von der Anpassung der Induktionsspule innerhalb der Chipkarte an den Halbleiterchip und von der wirksamen Fläche der als Antenne arbeitenden Induktionsspule ab, wobei die wirksame Fläche naturgemäß aufgrund der vorgegebenen Chipkartengröße limitiert ist.

Bekannte Verfahren und bekannte Chipkarten mit mehr als einer Spule weisen den Nachteil auf, dass aufgrund der begrenzten Fläche einer Chipkarte die Ansprechfeldstärke der jeweiligen Spulen nicht ausreichend optimiert werden können. Da die Ansprechfeldstärke der Funktionalitäten der jeweiligen Spulen von deren umschlossenen Fläche abhängt, die Fläche auf der Chipkarte jedoch begrenzt ist, bestehen nur wenig Möglichkeiten, eben dieses Ansprechverhalten zu optimieren. Ausgehend vom Stand der Technik ist es wünschenswert, eine Chipkarte bereitzustellen, welche Spulen aufweist, welche weitgehend unabhängig von der jeweils umschlossenen Fläche bezüglich deren Ansprechfeldstärke optimiert werden können. Dies ist insbesondere der Fall, falls eine Optimierung der Ansprechfeldstärke nach Vorgaben von Normen oder einem Kundenwunsch erfolgen soll..

Es ist Aufgabe der vorliegenden Erfindung ein Verfahren zur Optimierung der Ansprechfeldstärke mindestens einer Schaltung, bestehend aus einer Spule, wobei die Spule mit mindestens einem elektronischen Bauelement, z.B. einem Chip, verbunden ist, wobei sich die Schaltung auf einer Chipkarte befindet, bereit zu stellen, sodass die Ansprechfeldstärke einer jeweiligen Schaltung einstellbar ist. Es ist somit ferner eine Aufgabe der vorliegenden Erfindung eine Chipkarte bereitzustellen, welche bezüglich der Ansprechfeldstärke mindestens einer Spule optimiert ist.

Diese Aufgabe wird durch eine Chipkarte mit einem Kartenkörper und mindestens zwei Spulen gemäß dem unabhängigen und dem nebengeordneten Anspruch gelöst, wobei die Chipkarte mindestens ein Ferritelement aufweist. In den davon abhängigen Ansprüchen sind vorteilhafte Ausgestaltungen und Weiterbildungen der Erfindung angegeben.

Demgemäß wird ein kartenförmiger Datenträger mit einem Kartenkörper und zwei Spulen vorgeschlagen, wobei mindestens ein Ferritelement in dem Kartenkörper angeordnet ist.

Der erfindungsgemäße kartenförmige Datenträger gleicht in seinem Aufbau bekannten Chipkarten, wobei mindestens ein Ferritelement bezüglich mindestens einer der beiden Spulen derart vorteilhaft angeordnet ist, dass die Ansprechfeldstärke mindestens einer Spule optimiert ist. Bei Ferrit handelt es sich um einen elektrisch schlecht bzw. nicht leitenden Werkstoff. Hierbei kann das mindestens eine Ferritelement beispielsweise einstückig ausgeformt sein. Das Ferritelement kann beispielsweise mit Drucktechniken auf eine Folie des Chipkartenkörpers aufgedruckt oder als ein vorgefertigtes Element, sogenanntes Halbzeug, welches z.B. mittels Druckverfahren auf einer Trägerfolie hergestellt wird, in den Kartenkörper eingebaut werden. Das Halbzeug kann beispielsweise eine Folie sein, die aus einer Mischung aus Kunststoff und Ferrit besteht, wobei zur Herstellung der Folie der Kunststoff und das Ferrit gemeinsam extrudiert werden. Typischerweise bestehen Chipkarten bzw. kartenförmige Datenträger aus mehreren Lagen bzw. Schichten. Diese jeweiligen Schichten weisen bestimmte physikalische Eigenschaften bzw. Bauelemente auf. Auch kann eine solche Schicht aus mindestens einer Folie bestehen. Erfindungsgemäß ist es besonders vorteilhaft, dass mindestens eine Ferritelement auf einer dieser Schichten anzuordnen, bevor die einzelnen Schichten zu einem Gesamtkartenkörper zusammenlaminiert werden. Auf diese Art und Weise lässt sich die erfindungsgemäße Chipkarte mit wenig technischem Aufwand bereitstellen.

Der erfindungsgemäße kartenförmige Datenträger ist insbesondere deshalb vorteilhaft, da z.B. gerade bei zwei Spulen mittels des Ferritelements eine Spule oder aber auch beide Spulen in Verbindung mit den mit ihnen verbundenen elektronischen Bauelementen bezüglich deren Ansprechfeldstärke optimiert werden können. Hierzu ist es möglich beispielsweise ein oder zwei Ferritelemente in dem Kartenkörper derart anzuordnen, dass eine oder zwei Spulen optimiert werden. Beispielsweise ist es auch möglich, dass zwei Spulen vorgesehen sind, welche sich zumindest teilweise überlappen. Wird ein Ferritelement innerhalb dieser Überlappung angeordnet, so ist es möglich, dass dieses eine Ferritelement innerhalb von beiden Antennenspulen oder innerhalb von einer Antennenspule angeordnet ist. Der Fachmann erkennt hierbei eine Reihe an Möglichkeiten, wie das mindestens eine Ferritelement bezüglich der beiden Spulen angeordnet werden kann. Insbesondere sei an dieser Stelle auf die Ausführungsformen gemäß den beigefügten Figuren verwiesen.

Gemäß eines Aspekts der vorliegenden Erfindung ist das mindestens eine Ferritelement in mindestens einer der beiden Antennenspulen angeordnet. Dies hat den Vorteil, dass jegliche Anordnungen von Spulen auf einer Chipkarte mittels des Ferritelements bzw. der Ferritelemente optimiert werden können. Dem Fachmann ergeben sich somit eine Vielzahl an Möglichkeiten, wie er bekannte Chipkarten derart anpassen kann, dass diese bezüglich ihrer Ansprechfeldstärke bzw. der Ansprechfeldstärke mindestens einer Spule optimiert sind.

Gemäß eines weiteren Aspekts der vorliegenden Erfindung stellt mindestens eine der zwei Antennenspulen Energie für den Betrieb eines Chips, z.B. eines RFID-Chips, und die andere Spule Energie für den Betrieb eines elektronischen Bauelements oder Schaltung z.B. eines Heizers für thermochrome Farben oder eines Leuchtmittels oder eines anderen geeigneten elektronischen Bauelements oder einer weiteren Schaltung bereit. Dies hat den Vorteil, dass in der erfindungsgemäßen Chipkarte ein RFID-Chip bereitgestellt werden kann, sodass sowohl dessen eine Spule in Verbindung mit dem verbundenen Chip erfindungsgemäß optimiert ist als auch die andere Spule für den Betrieb z.B. der LED oder des Heizers optimiert ist. Die andere Spule kann beispielsweise die Energie für eine Last, z.B. einem Heizer für thermochrome Farbe, zur Verfügung stellen. Eine thermochrome Farbe ist geeignet bei einem Temperaturwechsel die Farbe zu ändern bzw. transparent zu werden. Somit kann auf der Chipkarte ein sogenannter Heizer installiert werden, welcher es mitsamt der thermochromen Farbe ermöglicht, dass bestimmte verborgene Informationen auf der Chipkarte sichtbar werden. Dies dient beispielsweise einer zumindest teilweisen Sichtbarmachung der Personalisierung der Chipkarte oder auch der Implementierung einer Sicherheitsfunktionalität. Ferner kann eine Spule der erfindungsgemäßen Chipkarte auch ein Leuchtmittel in der Karte mit Energie versorgen. Hierbei können mehrere Leuchtmittel, wie z.B. LED, OLED, EL oder weitere Elemente Verwendung finden. Auch kann mit den verbauten Spulen eine andere funktionale Last, z.B. ein Display, betrieben werden, wozu gegebenenfalls weitere Bauelemente vorzusehen sind.

Gemäß eines weiteren Aspekts der vorliegenden Erfindung liegt das mindestens eine Ferritelement als eine Ferritfolie vor. Dies hat den Vorteil, dass das Ferritelement auf einfache Art und Weise in eine Schicht des Kartenkörpers eingebracht werden kann. Alternativ ist das mindestens eine Ferritelement ein vorgefertigtes Element, z.B. auf einer Trägerfolie, sodass das Element einfach in den Kartenkörper eingebaut werden kann.

Gemäß eines weiteren Aspekts der vorliegenden Erfindung ist das mindestens eine Ferritelement derart bezüglich der zwei Spulen angeordnet, dass eine Spule bevorzugt mit Energie versorgt wird. Dies hat den Vorteil, dass mittels eines Sammelns von Feldlinien die Ansprechfeldstärke einer der beiden Spulen optimiert wird.

Gemäß eines weiteren Aspekts der vorliegenden Erfindung haben die zwei Spulen, die jeweils mit mindestens einem elektronischen Bauelementen verbunden sind, z.B. RFID-Chip, Heizer für thermochrome Farben, Leuchtmittel, wie z.B. eine LED, Display, weitere elektronische Schaltung, etc., verbunden sind, eine unterschiedliche oder eine gleiche Resonanzfrequenz, wobei die Spulen und die verbundenen elektronischen Bauelemente von einem gemeinsamen elektromagnetischen Feld eines Lesegeräts mit Energie versorgt werden, wobei das elektromagnetische Feld des Lesegeräts eine Frequenz hat, die gleich oder unterschiedlich ist bezüglich mindestens einer der Resonanzfrequenzen. Dies hat den Vorteil, dass beide Spulen mit den mit ihnen verbundenen elektronischen Bauelementen mittels eines gemeinsamen elektromagnetischen Felds des Lesegeräts mit Energie versorgt werden, wobei die Resonanzfrequenzen der beiden Spulen mit den mit ihnen verbundenen elektronischen Bauelementen und die Frequenz des elektromagnetischen Felds zueinander beliebig wählbar sind, solange die beiden Spulen mit den mit ihnen verbundenen elektronischen Bauelementen durch das elektromagnetische Feld des Lesegeräts mit Energie versorgt werden.

Gemäß eines weiteren Aspekts der vorliegenden Erfindung sind die zwei Spulen auf unterschiedlichen Seiten eines Substrats angeordnet. Dies hat den Vorteil, dass eine Mehrzahl an Möglichkeiten eröffnet wird, wie die erfindungsgemäße Chipkarte implementiert werden kann.

Gemäß eines weiteren Aspekts der vorliegenden Erfindung sind die zwei Spulen auf unterschiedlichen Substraten angeordnet. Dies hat den Vorteil, dass die Spulen in unterschiedlichen Schichten des Chipkartenkörpers angeordnet werden können. Somit können die beiden Spulen auch separat bereitgestellt werden und anschließend die einzelnen Schichten laminiert werden.

Gemäß eines weiteren Aspekts der vorliegenden Erfindung sind die zwei Spulen einlagig oder zweilagig ausgeformt. Dies hat den Vorteil, dass eine erste Spule einlagig und eine zweite Spule zweilagig ausgeformt werden kann oder aber auch beide Spulen einlagig ausgeformt werden können oder zweilagig ausgeformt werden können. Somit bietet sich eine größtmögliche Flexibilität bezüglich der verwendeten Spulen, Substrate und Herstellungstechnologien.

Gemäß eines weiteren Aspekts der vorliegenden Erfindung haben die zwei Spulen eine gleiche oder unterschiedliche geometrische Form, z.B. quadratisch, rechteckig oder kreisförmig, gleiche oder unterschiedliche Abmessungen und überlappen sich zumindest teilweise oder gar nicht. Dies hat den Vorteil, dass je nach Anwendung unterschiedliche geometrische Formen, Abmessungen und Überlappungen von Antennenspulen verwendet werden können.

Gemäß eines weiteren Aspekts der vorliegenden Erfindung ist das Ferritelement derart bezüglich der zwei Antennenspulen angeordnet, dass die Ansprechfeldstärke einer der zwei Antennenspulen und der damit jeweils verbundenen elektronischen Bauelemente verringert ist. Dies hat den Vorteil, dass die Spule mit weniger Energieaufwand angesprochen werden kann. Zudem kann die Ansprechfeldstärke der Spule und der damit verbundenen elektronischen Bauelemente angepasst werden, ohne dass die Größe der umschlossenen Fläche variiert werden muss. Ferner kann die Ansprechfeldstärke auf einfache technische Weise mittels des Ferritelements eingestellt werden.

Gemäß eines weiteren Aspekts der vorliegenden Erfindung ist das Ferritelement kleiner, gleich groß oder größer als eine der zwei Spulen dimensioniert. Dies hat den Vorteil, dass dem Fachmann eine größtmögliche Flexibilität bezüglich der Ausgestaltung des Ferritelements gewährt wird.

Die Aufgabe wird ebenfalls gelöst durch ein Verfahren zum Bereitstellen eines kartenförmigen Datenträgers mit einem Kartenkörper und zwei Spulen, wobei mindestens ein Ferritelement in dem Kartenkörper angeordnet wird.

Ferner ist es möglich, dass das mindestens eine Ferritelement durch Drucken auf eine Lage des Kartenkörpers aufgebracht oder als ein vorgefertigtes Element in den Kartenkörper eingelegt wird. Dies hat den Vorteil, dass die erfindungsgemäße Chipkarte gemäß herkömmlicher Produktionsprozesse bereitgestellt werden kann, welche lediglich derart angepasst werden müssen, dass das Ferritelement in den Kartenkörper an geeigneter Stelle eingebracht wird.

Somit wird ein erfindungsgemäßer kartenförmiger Datenträger sowie ein entsprechendes Verfahren zum Bereitstellen des kartenförmigen Datenträgers vorgeschlagen, welche es ermöglichen, in einer Chipkarte weitgehend unabhängig von der jeweils umschlossenen Fläche der einzelnen Spulen eine der Spulen bevorzugt mit Energie zu versorgen. Somit ist die Ansprechfeldstärke bevorzugt in einer Spule verringert.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den nicht maßstäblichen, sondern nur der Erläuterung des Prinzips der Erfindung dienenden Zeichnungen, die zeigen:
- Figuren 1A-1C:: mögliche Anordnungen von zwei z.B. Spulen innerhalb einer Chipkarte in unterschiedlichen Ebenen bzw. auf unterschiedlichen Substraten im Querschnitt der Chipkarte;
- Figur 1D:: mögliche Anordnung von einer einlagigen und einer mehrlagigen Spule auf einem Substrat;
- Figuren 2A-2D:: Spulenanordnungen gemäß herkömmlicher Chipkarten als ein Ausgangspunkt der vorliegenden Erfindung in Aufsicht;
- Figuren 3A-3D:: benachbart angeordnete Spulen innerhalb eines Chipkartenkörpers als ein Ausgangspunkt der vorliegenden Erfindung in Aufsicht;
- Figuren 4A-4D:: erfindungsgemäße kartenförmige Datenträger mit mindestens einem Ferritelement in Aufsicht;
- Figuren 5A-5C:: Kartenanordnungen mit einem Ferritelement gemäß der vorliegenden Erfindung in Aufsicht; und
- Figuren 6A-6C:: Kartenanordnungen mit einem Ferritelement gemäß der vorliegenden Erfindung in Aufsicht.

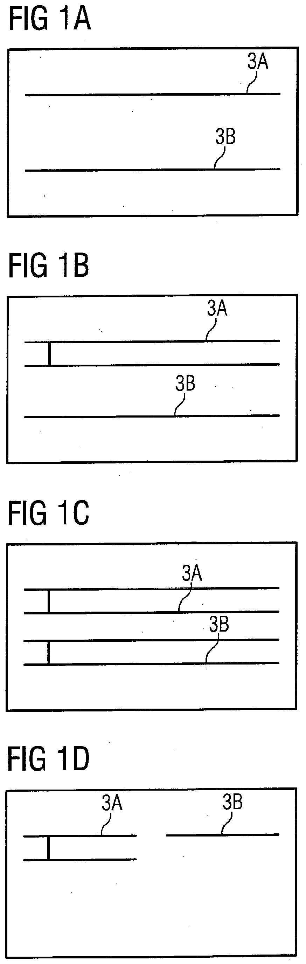

Werden zwei Spulen in unterschiedlichen Lagen in der Karte untergebracht, so ergeben sich die Möglichkeiten, wie sie in den Figuren 1A-1C exemplarisch für z.B. zwei Spulen gezeigt werden. So zeigt Figur 1A eine erste einlagige Spule 3A und eine zweite einlagige Spule 3B. Diese beiden Spulen sind bezüglich eines Kartenkörpers übereinander angeordnet. In den vorliegenden Figuren 1A-1D ist der Kartenkörper im Querschnitt gezeigt. Analog zeigt Figur 1B eine zweilagige Spule 3A und eine einlagige Spule 3B. Ferner ist es möglich, sowohl eine zweilagige Spule 3A sowie eine weitere zweilagige Spule 3B erfindungsgemäß zu verwenden, wie es in Figur 1C gezeigt ist. Es ist jedoch auch möglich, die Spulen 3A und 3B nebeneinander anzuordnen. Dies ist in Figur 1D gezeigt, wobei auf der linken Seite eine zweilagige Spule 3A und auf der rechten Seite eine einlagige Spule 3B angeordnet ist. In der vorliegenden Figur 1D sind z.B. zwei Spulen 3A und 3B nebeneinander angeordnet.

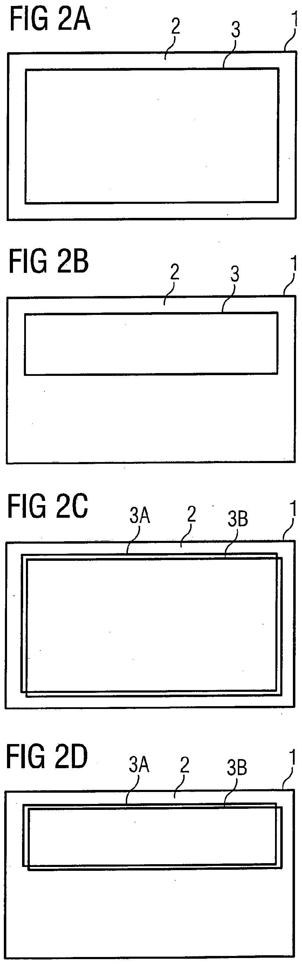

In den folgenden Figuren wird eine Aufsicht auf die Karte dargestellt. Figuren 2A-2D zeigen wie herkömmliche Spulen angeordnet werden können, dass diese mittels eines Ferritelements optimiert werden können. So zeigt Figur 2A eine herkömmliche Chipkarte 1 mit einem Kartenkörper 2 und einer Spule 3, die sich über fast die gesamte Fläche der Karte 2 erstreckt. Analog zeigt Figur 2B eine Spule 3, die sich nur über einen Teil der Fläche der Karte 2 erstreckt. Wie nun in Figur 2C ersichtlich ist, können zwei gleich große oder nahezu gleich große Spulen derart zueinander in dem Kartenkörper 2 angeordnet werden, dass sich diese im Wesentlichen überlappen. Dies ist in Figur 2D für zwei Spulen 3A und 3B gezeigt, die sich jeweils nur über einen Teil der Fläche der Karte 2 erstrecken.

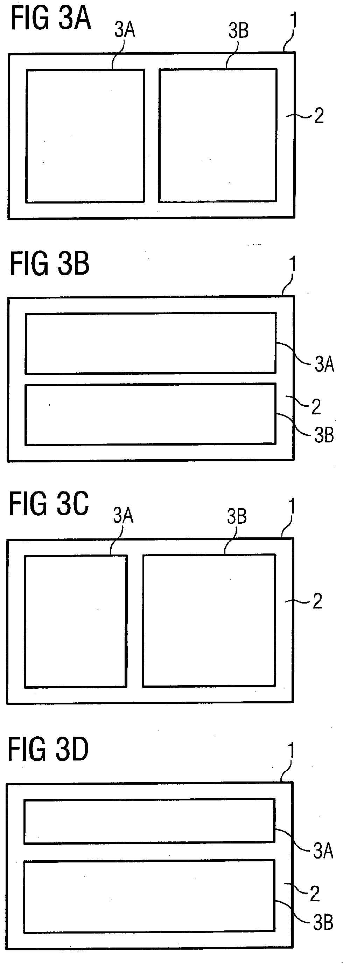

Es ist möglich, die nebeneinander angeordneten Spulen 3A und 3B zu verwenden, wie sie in den Figuren 3A-3D gezeigt sind. So zeigt Figur 3A zwei horizontal benachbarte Spulen. Hierbei ist es möglich, dass z.B. die linke Spule 3A für einen RFID-Chip vorgesehen ist und die rechte Spule 3B für ein LED vorgesehen ist. Während in Figur 3A die Spulen nebeneinander angeordnet sind, so ist es gemäß Figur 3B auch möglich, diese übereinander anzuordnen, ohne dass sich diese überlappen. Hierbei ist es nicht notwendig, dass beide Spulen 3A und 3B die gleiche Größe aufweisen. Die Größe ist beispielsweise variierbar wie es in Figur 3C und 3D gezeigt ist.

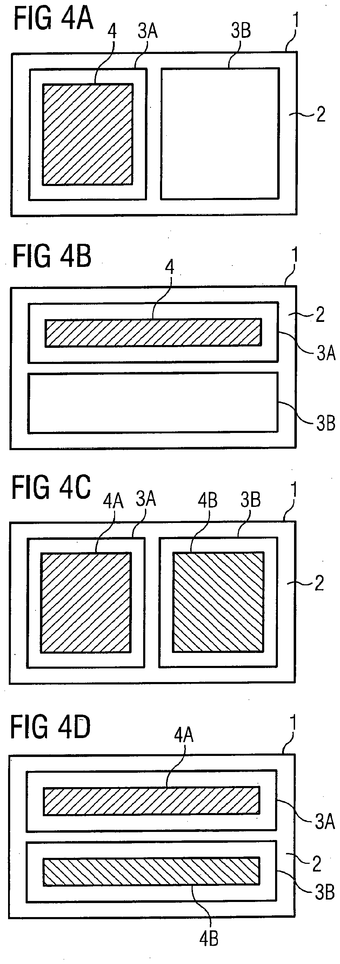

Erfindungsgemäß werden nunmehr diese Kartenanordnungen mit einem Ferritelement 4 bestückt. Hierzu sind diverse Ausgestaltungen möglich, wobei ein einzelnes Ferritelement Verwendung finden kann, wie es in Figur 4A und Figur 4B gezeigt ist oder es können aber auch für jede Spule ein eigenes Ferritelement 4A und 4B angeordnet werden, wobei die Ferritelemente 4A und 4B in Material, Abmessung und geometrischer Form gleich oder unterschiedlich sein können. Dies zeigt Figur 4C und Figur 4D. Auch zeigen die Figuren 4A-4D eine Ausgestaltung des Ferritelements derart, dass dieses in etwa den Dimensionen der Spulen angepasst ist. Keinesfalls sind die Figuren einschränkend, sodass es auch möglich ist, die Ferritelemente weiter bezüglich ihrer Abmessung zu variieren.

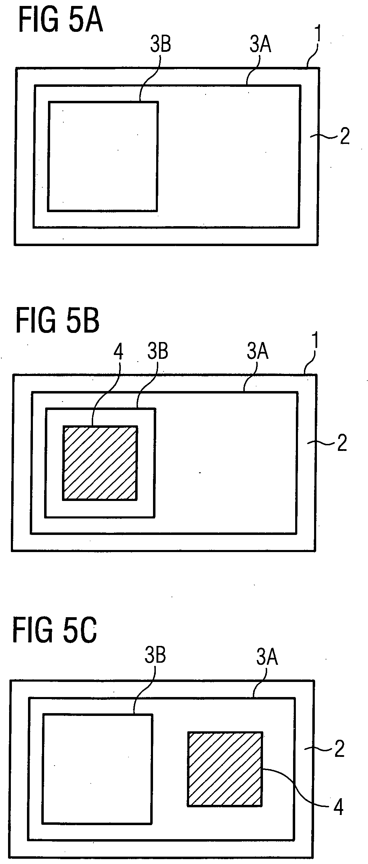

Figurengruppe 5 zeigt eine Chipkarte 1 mit zwei ineinander liegenden Spulen, vorliegend eine Spule 3A und eine Spule 3B. Die größere Spule 3A ist hier bevorzugt die Spule an welche ein RFID-Chip angeschlossen ist, was aufgrund der benötigten Lesereichweite vorteilhaft ist. Die innere Spule 3B stellt Energie für die Zusatzfunktion, beispielsweise eine LED, der Karte zur Verfügung. Wie in der Figur 5B ersichtlich ist, ist es möglich, ein einzelnes Ferritelement innerhalb der beiden Spulen 3A und 3B anzuordnen, da diese sich überlappen. Ferner ist es jedoch auch möglich, das Ferritelement 4 in lediglich einer Spule nämlich der Spule 3A anzuordnen, ohne dass sich das Ferritelement 4 innerhalb der Spule 3B befindet. Dies ist vorliegend in der Figur 5C gezeigt. Der Ferrit bzw. das Ferritelement dient dazu, das Verhältnis der Induktivitäten der beiden Spulen zu beeinflussen. Alternativ ist es bei sich teilweise überlappenden Spulen 3A und 3B möglich, dass das Ferritelement 4 innerhalb einer Spule 3A oder 3B angeordnet ist, wobei diese Alternative nicht in den Figuren dargestellt ist.

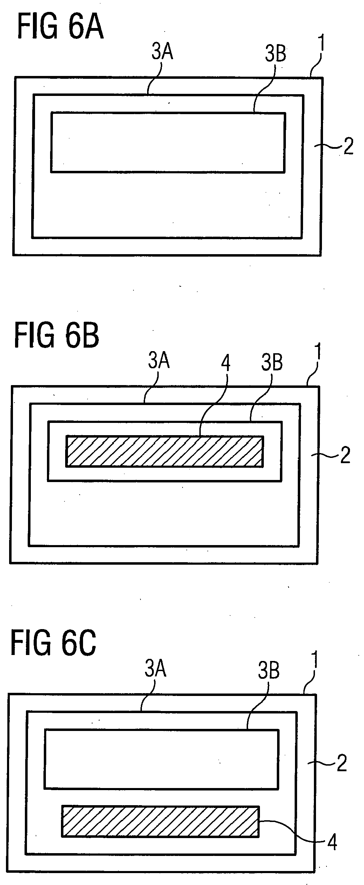

Figur 6A zeigt eine Chipkarte 1 mit einem Kartenkörper 2 mit zwei ineinander liegenden Spulen, einer Spule 3A und einer Spule 3B. Diese Kartenanordnung dient als Ausgangspunkt für die erfindungsgemäße Chipkarte bzw. den erfindungsgemäßen kartenförmigen Datenträger 1. Wie in Figuren 6B und 6C ersichtlich ist, kann das Ferritelement 4 auch länglich ausgestaltet werden und entweder innerhalb beider Spulen 3A und 3B platziert werden oder auch innerhalb lediglich einer Spule, wie es in Figur 6C gezeigt ist.

Die Platzierung des Ferrits bzw. des Ferritelements 4 ist in der Tiefe der Karte unabhängig von den Spulen. Der Ferrit kann auf der selben Substratoberfläche wie eine der Spulen angebracht sein oder auf der Rückseite dieses Substrats. Der Ferrit kann auch auf einer anderen Folienlage innerhalb der Karte angebracht sein. Ferner kann das Ferritelement 4 auch außen auf der Chipkarte 1 angebracht werden. Der Fachmann erkennt hierbei weitere Ausgestaltungen der vorliegenden Erfindung. Die in den Figuren gezeigten Anordnungen dienen lediglich der beispielhaften Erläuterung der vorliegenden Erfindung.

## Patentansprüche

1. Kartenförmiger Datenträger (1) mit einem Kartenkörper (2) und zwei Spulen (3A, 3B), **dadurch gekennzeichnet, dass** mindestens ein Ferritelement (4) in dem Kartenkörper (2) angeordnet ist.

2. Datenträger (1) gemäß Anspruch 1, **dadurch gekennzeichnet, dass** das mindestens eine Ferritelement (4) in mindestens einer der beiden Spulen (3A, 3B) angeordnet ist.

3. Datenträger (1) gemäß Anspruch 1 oder 2, **dadurch gekennzeichnet, dass** mindestens eine der zwei Spulen (3A, 3B) mit einem elektronischen Bauelement verbunden ist.

4. Datenträger (1) nach einem der vorhergehenden Ansprüche, **dadurch gekennzeichnet, dass** das mindestens eine Ferritelement (4) als eine Ferritfolie oder als ein vorgefertigtes Element vorliegt.

5. Datenträger (1) nach einem der vorhergehenden Ansprüche, **dadurch gekennzeichnet, dass** das mindestens eine Ferritelement (4) derart bezüglich der zwei Spulen (3A, 3B) angeordnet ist, dass eine Spule (3A) bevorzugt gegenüber der anderen Spule (3B) mit Energie versorgt wird.

6. Datenträger (1) nach einem der vorhergehenden Ansprüche, **dadurch gekennzeichnet, dass** die zwei Spulen (3A, 3B), die jeweils mit mindestens einem elektronischen Bauelementen verbunden sind, eine unterschiedliche oder eine gleiche Resonanzfrequenz haben,
wobei die Spulen (3A, 3B) und die verbundenen elektronischen Bauelemente von einem gemeinsamen elektromagnetischen Feld eines Lesegeräts mit Energie versorgt werden,
wobei das elektromagnetische Feld des Lesegeräts eine Frequenz hat, die gleich oder unterschiedlich ist bezüglich mindestens einer der Resonanzfrequenzen.

7. Datenträger (1) nach einem der vorhergehenden Ansprüche, **dadurch gekennzeichnet, dass** die zwei Spulen (3A, 3B) auf unterschiedlichen Seiten eines Substrates angeordnet sind.

8. Datenträger (1) nach einem der Ansprüche 1 bis 6, **dadurch gekennzeichnet, dass** die zwei Spulen (3A, 3B) auf unterschiedlichen Substraten angeordnet sind.

9. Datenträger (1) nach einem der vorhergehenden Ansprüche, **dadurch gekennzeichnet, dass** die zwei Spulen (3A, 3B) einlagig oder zweilagig oder dass eine Spule einlagig und die andere Spule zweilagig ausgeformt sind.

10. Datenträger (1) nach einem der vorhergehenden Ansprüche, **dadurch gekennzeichnet, dass** die zwei Spulen (3A, 3B) eine gleiche oder unterschiedliche geometrische Form haben, gleiche oder unterschiedliche Abmessungen haben und sich zumindest teilweise oder gar nicht überlappen.

11. Datenträger (1) nach einem der vorhergehenden Ansprüche, **dadurch gekennzeichnet, dass** das Ferritelement (4) derart bezüglich der zwei Spulen (3A, 3B) angeordnet ist, dass die Ansprechfeldstärke einer der zwei Spulen (3A, 3B) verringert ist.

12. Datenträger (1) nach einem der vorhergehenden Ansprüche, **dadurch gekennzeichnet, dass** das Ferritelement (4) kleiner, gleich groß oder größer als eine der zwei Spulen (3A, 3B) dimensioniert ist.

13. Verfahren zum Bereitstellen eines kartenförmigen Datenträgers (1) mit einem Kartenkörper (2) und zwei Spulen (3A, 3B), **dadurch gekennzeichnet, dass** mindestens ein Ferritelement (4) in dem Kartenkörper (2) angeordnet wird.

14. Verfahren nach Anspruch 13, **dadurch gekennzeichnet, dass** das mindestens eine Ferritelement (4) durch Drucken auf eine Lage des Kartenkörpers (2) aufgebracht oder als ein vorgefertigtes Element in den Kartenkörper (2) eingelegt wird.
